# FASCICULE DE BREVET EUROPEEN

(11) **EP 2 149 223 B1**
(45) Date de publication et mention de la délivrance du brevet: **30.03.2011**
(21) Numéro de dépôt: 08736595.3
(22) Date de dépôt: 25.04.2008
(51) Int. Cl.: H04L 12/22

(54) **SYSTEME ET PROCEDE DE TRAITEMENT PARALLELISE**
SYSTEM UND EINRICHTUNG FÜR PARALLELISIERTE VERARBEITUNG
SYSTEM AND DEVICE FOR PARALLELISED PROCESSING

(30) Priorité: 27.04.2007 FR 0703095
(43) Date de publication de la demande: 03.02.2010
(73) Titulaire: THALES, 92200 Neuilly-sur-Seine (FR)
(72) Inventeur: MAXIMILIEN, Benoît, F-78150 Le Chesnay (FR); KSINANT, Vladimir, F-92130 Issy Les Moulineaux (FR)
(74) Mandataire: Dudouit, Isabelle
(86) Numéro de dépôt international: PCT/EP2008/055118
(87) Numéro de publication internationale: WO 2008/135418

(56) Documents cités:
- EP-A- 1 283 630
- WO-A-2007/006014
- US-A1- 2006 064 510

## Description

L'objet de l'invention concerne un système et un procédé parallélisé, c'est-à-dire, où plusieurs entités élémentaires comprenant une unité de routage et une unité de traitement sont mises en parallèle, permettant d'assurer, à la fois, les fonctions de sécurité dans un dispositif et le cloisonnement fort séparant deux niveaux de sécurité différents.

Elle est utilisée, par exemple, dans le domaine de la sécurité des systèmes d'information. Plus particulièrement, l'invention porte sur la mise en parallèle ou « parallélisation » de fonctions de sécurité permettant de garantir le cloisonnement d'informations sensibles. Ainsi, des fonctions de sécurité peuvent être mises en oeuvre à haut débit ou pouvant atteindre de hautes performances, alors que les ressources matérielles et/ou logicielles utilisées restent à bas débit ou à de basses performances. Les propriétés importantes de sécurité telles que le cloisonnement restent scrupuleusement respectées. Des applications sont, par exemple, envisageables pour les équipements suivants : des chiffreurs IP haut débit, des chiffreurs d'artères haut débit <(en particulier Ethernet), des dispositifs Pare-feu haut débit...

En manière de sécurité des systèmes d'information, il est nécessaire de garantir qu'une information a subi un certain nombre de traitements avant de franchir une frontière (ou cloisonnement) située entre deux zones ayant des niveaux de sécurité différents.

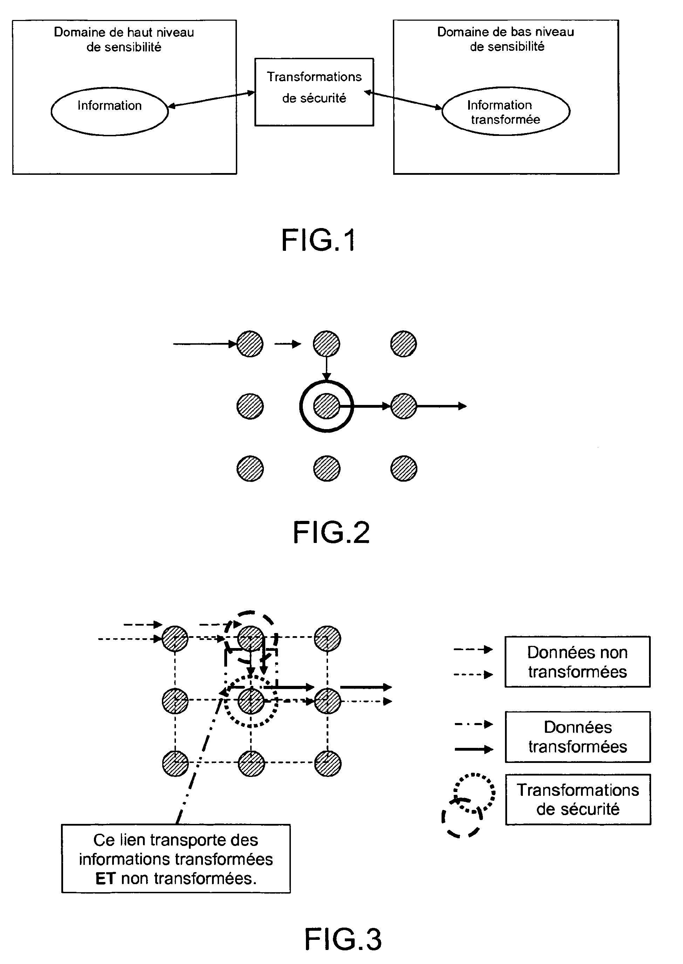

Par exemple, la figure 1 schématise le transfert d'une information A située dans un domaine de haut niveau de sensibilité vers un niveau B de bas niveau de sensibilité, au cours duquel, l'information A a été transformée. Il convient, en particulier, d'être en mesure de prouver qu'une information ayant un niveau haut de sensibilité donnée ne se retrouve pas inchangée en passant dans un domaine de bas niveau de sensibilité.

Parmi les transformations de sécurité qui permettent de passer d'un domaine à un autre, les plus courantes sont :
- des traitements cryptographiques sur les données transférées afin d'en assurer la confidentialité et/ou l'intégrité,
- des traitements de filtrage afin de supprimer les informations qui ne sont pas autorisées à passer d'un domaine à l'autre,
- des traitements de journalisation afin de conserver une trace des actions effectuées et permettre une analyse à posteriori.

Certaines de ces transformations sont extrêmement coûteuses en terme de traitements et sont donc difficiles à réaliser à haut débit. En effet, elles sont effectuées par des éléments matériels ou logiciels dont la puissance est limitée.

Comme les transformations de sécurité correspondant à de longs traitements requièrent beaucoup de ressources, une solution consiste à paralléliser les traitements de sécurité en employant un routage rapide des données vers une ressource disponible. Pour que la solution soit utile, le routage doit, notamment être plus rapide que la transformation de sécurité (correspondant aux différents traitements effectués sur les données transitant d'un domaine de niveau de sécurité élevé vers un domaine de sécurité moins élevé).

Le brevet FR 2 863 076 divulgue un système cryptographique à architecture modulaire permettant l'implémentation matérielle de protocoles de sécurité à très haut débit et à fort niveau de sécurité. Le champ d'application de sécurité de ce brevet concerne les produits de sécurité de chiffrement haut débit intégré dans des réseaux de communications ou systèmes d'information.

Il est aussi connu de l'art antérieur, des équipements de sécurité de type pare-feu et chiffreurs permettant de garantir un haut niveau de sécurité.

Par ailleurs, il existe des mécanismes de mise en parallèle des traitements dans le domaine des systèmes d'exploitation. Par exemple, la figure 2 schématise une architecture parallèle de type grille. Cette architecture ne garantit toutefois pas aisément le cloisonnement fort.

La figure 3 décrit le mécanisme de mise en parallèle mis en oeuvre dans une telle architecture. Dans une grille, tous les liens peuvent potentiellement transporter des informations directes « rouges , et « noires », termes habituellement utilisés dans le domaine technique.

S'ils s'avèrent efficaces, les dispositifs selon l'art antérieur présentent toutefois les inconvénients suivants :
- Ils ne permettent pas facilement la mise en parallèle des traitements de sécurité. Leurs performances sont donc limitées par les performances des coeurs effectuant les traitements de sécurité.
- le genre d'architecture ne permet pas l'évolutivité et l'adaptabilité de la solution de sécurité (ex : un équipement de chiffrement) aux nouvelles contraintes de réseau, tels que un nouvel usage, un nouveau standard, de nouveaux protocoles, etc.....
- par ailleurs, les mécanismes de mise en parallèle ou « parallélisation » actuels ne sont pas compatibles simplement d'un strict cloisonnement entre domaines de sensibilités différents.

Le brevet EP 1 283 630 divulgue un système comprend une seule unité élémentaire (en effet pas de notion de parallélisation des UTs).

La demande de brevet US 2006/0064510 divulgue un système comprenant plusieurs unités élémentaires, les données suivant pour son traitement un parcours prédéterminé à travers des unités élémentaires. Il n'existe toutefois pas de concept de données non traitées, chaque dispositif mettant en oeuvre une certaine opération.

La demande de brevet WO 2007/006014 divulgue un système comprenant plusieurs dispositifs de traitement et deux modules de routage.

L'objet de l'invention repose sur une nouvelle approche, en offrant un dispositif modulaire adapté à mettre en parallèle ces traitements tout en conservant la garantie de cloisonnement des informations sensibles. Le dispositif modulaire comporte plusieurs entités élémentaires de traitement des données, chaque entité comprenant une unité de routage et une unité de traitement. De cette façon, les transformations de sécurité peuvent être effectuées à haut débit, tout en continuant à utiliser les éléments matériels ou logiciels habituellement employés par l'Homme du métier.

L'invention concerne un système pour traiter des données pouvant être échangées entre au moins un premier domaine ayant un niveau de sécurité A et un deuxième domaine ayant un niveau de sécurité B, avec A différent de B , caractérisé en ce qu'il comporte au moins :
plusieurs entités élémentaires EEi, chacune desdites entités comprenant un module de routage URi et un dispositif UTi de traitement des données, le module de routage URi comprenant au moins une entrée li dans le domaine de niveau de sécurité A pour les données à traiter et au moins une première sortie Pi pour les données qui n'ont pas été traitées et qui restent soit dans le domaine de niveau de sécurité A, soit sont transmises vers l'entrée d'une autre entité élémentaire, et une deuxième sortie Li reliée au dispositif de traitement UTi, qui comprend une sortie Oi pour les données traitées qui passent dans le domaine de niveau de sécurité B, et en ce que lesdites entités élémentaires, sont reliées de façon telle que la première sortie Pi d'une unité de routage URi pour les données non traitées soit reliée à une entrée Ij d'une unité de routage URj d'une autre entité élémentaire EEj.

Les entités élémentaires sont, par exemple, mises en parallèle les unes aux autres, de façon telle que la sortie Pi d'une unité de routage URi pour les données non traitées soit reliée à une entrée Ij d'une unité de routage URj d'une autre entité élémentaire EEj.

Les entités élémentaires peuvent - par exemple - être disposées selon une topologie arbre.

Les entités élémentaires correspondent, par exemple, à une topologie en anneau, le domaine A formant un anneau externe, dans lequel se trouvent plusieurs entités élémentaires, chaque entité élémentaire EEi comportant une première entrée reliée au domaine A, , la sortie Pi d'une entité élémentaire EEi est reliée à une entrée Ii+1 d'une entité élémentaire suivante EEi+1, chaque entité élémentaire étant reliée par une sortie Oi au domaine B.

L'invention concerne aussi un procédé pour traiter des données dans un système comprenant au moins deux domaines ayant des niveaux de sécurité différents, le premier domaine ayant un niveau de sécurité A et le deuxième domaine un niveau de sécurité B, caractérisé en ce qu'il comporte au moins les étapes suivantes :
o Recevoir dans le domaine de niveau de sécurité A, les données à traiter,
o Transmettre les données à traiter sur une entrée d'un premier module de routage URi,
o Vérifier si l'unité de traitement UTi associé à ce module de routage est disponible pour le traitement des données,
   o Si l'unité de traitement UTi est disponible, alors traiter les données qui passent dans le domaine de niveau de sécurité B,
   o Si l'unité de traitement UTi n'est pas disponible, alors les données restent dans le domaine de niveau de sécurité A et sont :
      ■ Soit transmises vers au moins une unité de routage d'une autre entité élémentaire au travers d'une sortie PASS,
      ■ Soit sorties du système en restant dans le domaine de niveau de sécurité A.

Les entités élémentaires sont disposées selon une topologie de type Vecteur (qui correspond à une topologie anneau ouvert) ou Matrice (qui correspond à un ensemble de vecteurs).

D'autres caractéristiques et avantages de la présente invention apparaîtront mieux à la lecture de la description qui suit d'un exemple donné à titre illustratif et nullement limitatif annexé des figures qui représentent :
- La figure 1 est un exemple de traitement des données entre deux niveaux de sécurité différents,
- Les figures 2 et 3 représentent un exemple d'architecture parallèle de type grille et des mécanismes mis en oeuvre (état de l'art antérieur),
- La figure 4 est un schéma fonctionnel d'une entité élémentaire selon l'invention,
- La figure 5 est un exemple de l'architecture interne d'une entité élémentaire comprenant une unité de routage et une unité de traitement reliées par une liaison interne. Les entités élémentaires ont la capacité d'être connectées les unes aux autres,
- La figure 6A est un exemple simplifié d'une connexion entre entités élémentaires suivant une topologie vectorielle (liaisons pass - entrée) et la figure 6B un focus sur la connexion entre les entités élémentaires ou plus précisément les unités de routage et de traitements les constituants,
- La figure 7 est un organigramme schématisant le fonctionnement du dispositif selon l'invention,
- Les figures 8 et 9 sont des exemples de différents modes de réalisation suivant une topologie de type anneau,
- Les figures 10 à 12 sont des exemples de différents modes de réalisation suivant une topologie de type arbre,
- Les figures 13 et 14 sont des exemples de différents modes de réalisation suivant une topologie de type matriciel.

L'architecture selon l'invention comporte, notamment les deux fonctionnalités suivantes :
- Utiliser des combinaisons d'entités élémentaires EEi adaptées à effectuer chacune les transformations de sécurité nécessaires,
- Router les données à traiter vers une entité élémentaire EEi disponible.

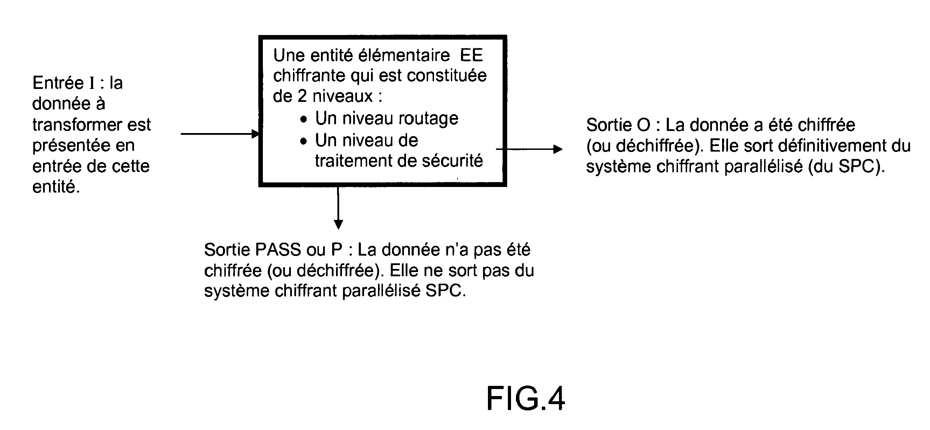

La figure 4 montre cette architecture où une entrée « I » correspondant à des données à transformer est présentée sur l'entrée d'une entité élémentaire EEi.

Deux sorties sont possibles ;
- une sortie « O » où la donnée a été chiffrée ou déchiffrée. Cette donnée ayant subi un traitement sort du système pour aller, par exemple, vers un réseau ou tout autre dispositif,
- une sortie « PASS » ou P, correspondant à une donnée qui n'a pas été traitée, (chiffrée ou déchiffrée ou tout autre traitement). Elle ne sort donc pas du système chiffrant parallélisé selon l'invention.

La figure 2 schématise de manière fonctionnelle, une entité élémentaire selon l'invention, permettant d'augmenter les capacités de traitement d'un système. Cette entité a notamment pour fonction de permettre la mise en parallèle ou « parallélisation » des traitements correspondant aux transformations de sécurité nécessaires pour passer d'un domaine de sécurité à un autre, par exemple du domaine A vers le domaine B comme il est indiqué à la figure 1. Ces transformations sont réalisées par des unités de traitement UT dont la puissance est limitée, en général.

La figure 4 est un schéma fonctionnel d'une entité élémentaire EEi selon l'invention, ayant pour fonction de chiffrer des informations et qui comprend deux niveaux :
- Un niveau de routage, réalisé par une unité de routage, URi, i étant l'indice correspondant au rang de l'unité dans le système de traitement,
- Un niveau de traitement de sécurité, exécuté par une unité de traitement, UTj, avec j le rang de l'unité de traitement dans le système

L'unité de routage doit être plus réactive (temps de traitement court) que l'unité de traitement de sécurité (temps de traitement long) pour que le mécanisme soit utile.

La mise en parallèle ou « parallélisation » des entités élémentaires est d'autant plus utile et efficace, que le traitement de routage est notablement plus court que les transformations de sécurité.

Les deux unités peuvent être associées, notamment par l'intermédiaire des informations d'état de disponibilité ou d'indisponibilité de l'unité de traitement.

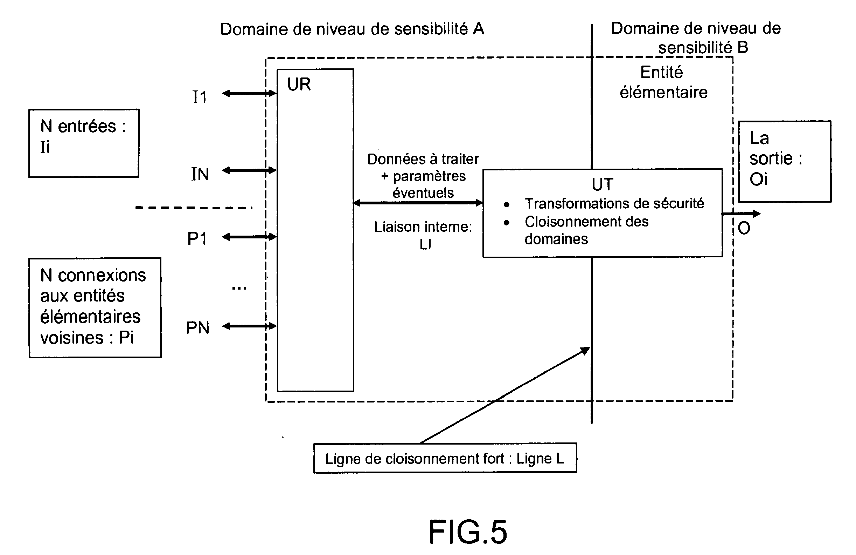

La figure 5 représente un exemple d'architecture du système parallélisé selon l'invention.

Sur cette figure un premier domaine de sensibilité A et un deuxième domaine de niveau de sensibilité B sont représentés. Dans cet exemple, le niveau de sensibilité A est supérieur au niveau de sensibilité B, c'est-à-dire que les informations doivent être traitées avant de pouvoir sortir du premier domaine A vers le domaine B.

La ligne de cloisonnement des deux domaines est matérialisée par la ligne L. Sur cet exemple de réalisation, le système comprend une unité de routage UR comprenant plusieurs entrées I1,.. ,IN, plusieurs sorties de types PASS P1,.....PN, une liaison interne LI reliant l'unité de routage UR à une unité de traitement UT, l'unité de traitement comprenant une sortie O pour les données traitées, c'est-à-dire pour les données chiffrées ou déchiffrées selon l'application visée.

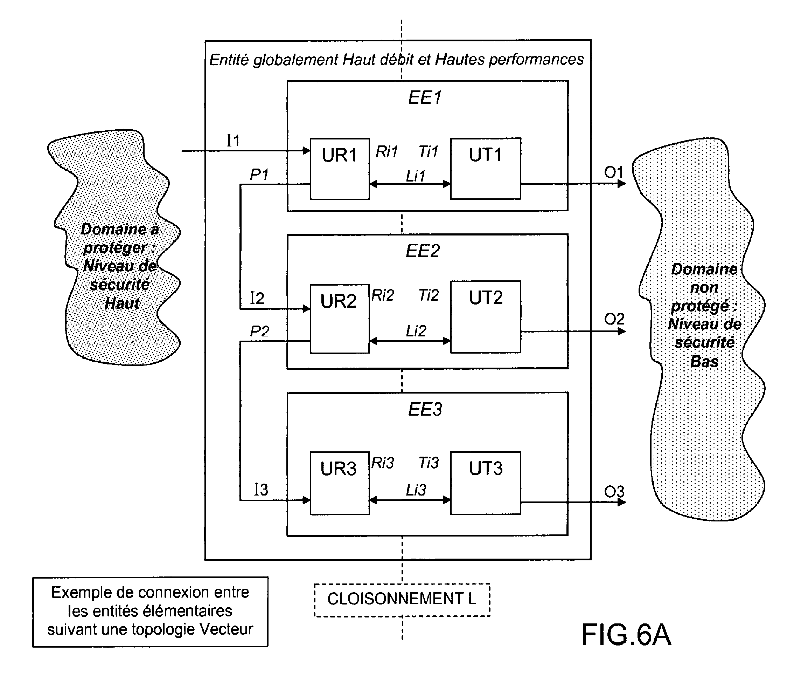

La figure 6A décrit un système selon l'invention comprenant N entités élémentaires EEi chacune étant constituée d'une unité de routage URi et d'une unité de traitement UTi. L'unité de routage UR1 comprend une première entrée I1 recevant les informations à traiter du domaine A (niveau de sensibilité Haut par exemple), une première sortie « Ri1 » par laquelle la donnée à traiter est envoyée vers une entrée Ti1 de l'unité de traitement UT1 associée, une deuxième sortie P1 sur laquelle transitent les données qui n'ont pas été envoyées à l'unité de traitement UT1 associée.

Une fois que l'unité de traitement UT1 a achevé le traitement de la trame de données, celle-ci étant protégée ou transformée est envoyée dans le domaine B (niveau de sensibilité bas) par la sortie 01.

La deuxième sortie P1 est, par exemple, en liaison avec une première entrée I2 d'une unité de routage UR2 faisant partie d'une deuxième entité élémentaire EE2.

L'unité de traitement UTi transmet à l'unité de routage associée URi, de manière régulière ou permanente, une indication de disponibilité. L'unité UTi peut accepter le flux de données à traiter ou être occupée. Dans ce dernier cas l'unité de traitement UTi ne doit pas recevoir l'information à traiter puisqu'elle est occupée. Les données à traiter issues de la sortie « PASS » de l'unité de routage sont alors transmises à une autre entité élémentaire. L'enchaînement du traitement des données s'effectue, par exemple, de la manière suivante : pour chaque entité élémentaire EEi, sur réception de données à traiter sur une entrée « Ii », l'unité de routage correspondante URi vérifie la disponibilité de l'unité de traitement UTi qui lui est associée.

Si elle est disponible, l'unité de routage URi transmet les données à l'unité de traitement UTi. L'unité de traitement UTi effectue les transformations de sécurité, et assure le cloisonnement entre les différents niveaux de sécurité (A et B).

Si l'unité de traitement UTi qui lui est associée est indisponible et ne peut recevoir d'informations à traiter, alors l'unité de routage URi cherche une sortie « PASSi » à utiliser pour transmettre les données à traiter vers une autre entité élémentaire EEk :
o Si une sortie « PASS » permet d'accéder à une entité élémentaire disponible ou plus précisément à son unité de traitement disponible, alors les données y sont transmises,
o Si aucune unité de traitement n'est disponible, alors les données sont supprimées ou subissent tout autre traitement.

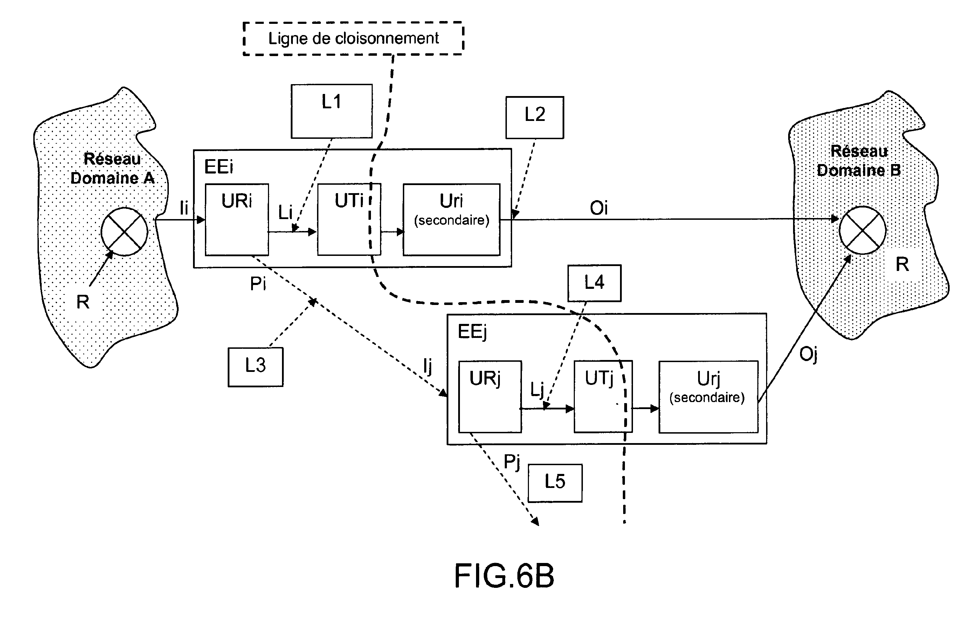

La figure 6B est un focus sur la connexion entre les entités élémentaires ou plus précisément les liaisons entre les unités de routage et de traitements les constituant.

L'entité racine, EEi dans l'exemple ne peut que traiter avec son UTi tout le trafic alors une partie des trames non traitées est déversée vers une Entité élémentaire « feuille EEj » (car sa capacité de routage URi est plus importante que sa capacité de traitement Uti).

L'exemple est donné avec 2 EEs mais d'autres « feuilles ou EEs » peuvent être rajoutées : il faut les connecter entres elles suivant le principe décrit précédemment : connecter le port Iz d'une feuille EEz au port Px d'une racine EEx.

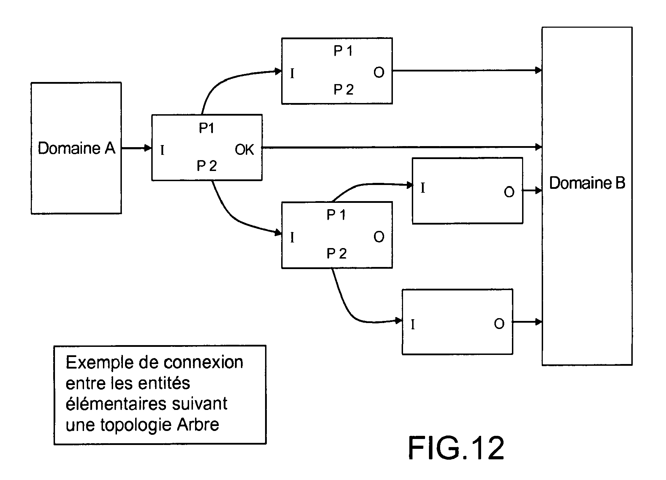

Afin de simplifier le dessin, chaque EEs a un seul port de communication « Pi ». C'est un exemple, on aurait pu mettre 2 ports « Pi » (cf figure 12) ou bien plus encore : cela dépend des besoins de trafic (de la densité du trafic et des capacité des Utx). Plus on rajoute de port Py, plus on complexifie l'arbre.

Le flux représenté sur la figure 6B est unidirectionnel afin de simplifier le dessin. Bien évidement, celui-ci peut être bidirectionnel : par exemple, il peut s'agir d'un flux qui soit à la fois chiffré ou déchiffré si les EEs sont des chiffreurs IP.

Uri (ou Urj) est l'unité de routage secondaire qui se trouve après l'unité de traitement pour le flux sortant. Le sens des flèches indique un flux qui part du domaine A et qui se dirige vers le domaine B. Ce sens peut aussi être inversé car les entités élémentaires peuvent traiter des flux bidirectionnels (par exemple dans le cas de chiffreurs qui peuvent faire du chiffrement et du déchiffrement). Conceptuellement, l'unité de routage est placée avant l'unité de traitement mais dans le cas d'un trafic bidirectionnel, la structure interne d'une entité élémentaire est bien évidemment symétrique avec une unité de traitement encadrée par deux unités de routage.

Le lien L1 est utilisé si l'unité de traitement Ui est disponible, dans ce cas, le flux est envoyé ensuite sur Oj après traitement.

Le lien L2 est utilisé une fois que l'unité de traitement Uti a fini son traitement sur les trames reçues sur Li ; elle est alors disponible pour traiter d'autres données.

Le lien L3 est utilisé si l'unité de traitement Uti est occupée car sa capacité de traitement est limitée par rapport au flux entrant (sur Li).

Le lien L4 est utilisé si l'unité de traitement Utj est disponible. Dans ce cas, le flux est envoyé ensuite sur Oj après traitement.

Le lien L5 est utilisé si l'unité de traitement Utj est occupée car elle a des capacités réduites par rapport au flux entrant sur Ij. Ce lien est connecté à une autre entrée Ih d'une autre entité EEh.

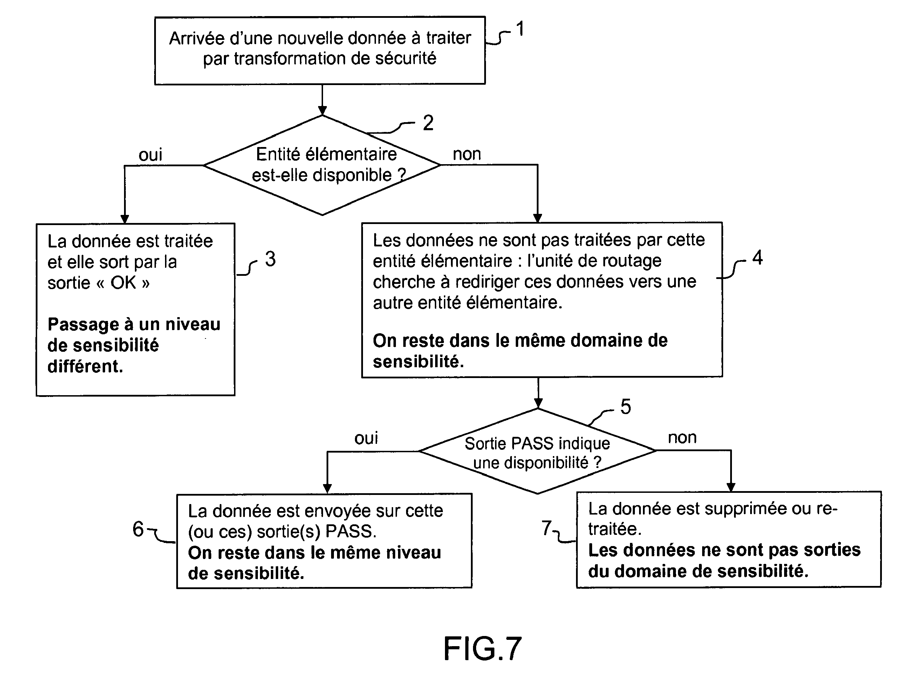

Un exemple d'enchaînement d'étapes est donné à la figure 7. Elles peuvent être résumées de la manière suivante :
I - arrivée d'une nouvelle donnée à traiter par transformation de sécurité, 1,
II - l'unité de Traitement Uti de l'entité élémentaire EEi est-elle disponible ?, 2,
   o Si oui alors les données sont traitées et elles sont envoyées vers la sortie « Oi », elles passent dans un domaine ayant un niveau de sensibilité différent, 3,
   o Si non, alors les données ne sont pas traitées par cette entité. élémentaire EEi, 4, l'unité de routage URi cherche à rediriger ces données vers une autre entité élémentaire EEk. On contrôle ou non, cela dépend des règles de routage mises en oeuvre, si la sortie de type « PASS » de l'unité de routage indique une disponibilité d'une autre entité élémentaire, 5. Si oui, l'unité de routage transmet par sa sortie « PASS » les données à traiter vers une entité élémentaire, 6. Pendant cette opération, on se trouve toujours dans le même domaine de sensibilité. S'il n'existe aucune entité élémentaire disponible, alors la donnée est supprimée ou retraitée, 7. Les données ne sont pas sorties du domaine de sensibilité de départ.

Le cloisonnement des données dans un domaine de sécurité qui leur est propre est respecté.

Les entités élémentaires sont connectées entre elles en branchant les sorties de type « PASSi » d'une entité élémentaire, plus précisément d'une unité de routage URi d'une entité élémentaire EEi, aux entrées de type « Ik » d'une autre entité élémentaire EEk, en général aux entrées de l'unité de routage URk associée à EEk.

Selon un mode de réalisation de l'invention, une procédure permettant de faire parvenir les données à traiter à une entité élémentaire disponible peut être celle décrite ci-après.

### Propagation des informations de disponibilité

Lorsque l'unité de traitement UTi d'une entité élémentaire EEi est disponible, elle le signale à son unité de routage URi par sa liaison interne, indiquée « LIi » sur la figure 6.

Lorsqu'une unité de routage URi reçoit l'information que son unité de traitement UTi associée est disponible, elle le signale à toutes les entités élémentaires connectées à toutes ses entrées « INPUT ».

Lorsqu'une unité de routage URi reçoit sur une de ses entrées / sorties « PASS », l'information qu'une unité de traitement UTi est disponible :
- Elle le signale à toutes les entités élémentaires connectées à toutes ses entrées « Ii ».
- Elle conserve l'information qu'une unité de traitement UTi est disponible en utilisant l'entrée/sortie « PASS » par où est arrivée l'information de disponibilité.

### Propagation des données à traiter vers une entité élémentaire disponible

Lorsqu'une unité de routage UR reçoit des données à traiter, l'unité de routage :
- regarde si son unité de traitement UT associée est disponible
   - Si elle l'est, elle lui fournit les données à traiter,
   - Si elle ne l'est pas, elle cherche parmi ses entrées/sorties « PASS » une entrée/sortie qui indique une information de disponibilité.
      - Si elle en trouve une, elle transmet les données à traiter sur cette entrée/sortie « PASS »
      - Si elle n'en trouve pas, elle détruit les données à traiter ou effectue un autre traitement (par exemple une mise en attente temporaire).

Il existe plusieurs manières de mise en oeuvre du procédé et du système décrits ci-dessus, suivant le niveau de réalisation envisagé par l'utilisateur.

Les unités de routage UR et de traitement UT peuvent être des composants logiciels. Le système peut alors être réalisé sous la forme de modules logiciels s'exécutant dans un environnement garantissant le cloisonnement entre modules, par exemple des systèmes d'exploitation sécurisés.

Les unités de routage UR et de traitement UT peuvent être des composants matériels, de type ASIC (...) FPGA (Field Programmable Gate Array), microprocesseurs, etc. Le système peut alors être réalisé sous la forme d'une carte architecturée autour d'un système de composants électroniques.

Les unités de routage UR et de traitement UT peuvent être des modules de sécurité, de type cartes électroniques. Le système peut alors être réalisé sous la forme d'un coffret architecturé autour d'un système parallèle de cartes ou de modules de sécurité.

L'entité élémentaire EE est un équipement de sécurité, par exemple un chiffreur IP (Internet Protocol). Le système selon l'invention est alors un agrégat de mini-entités de sécurité qui peuvent être des mini-chiffreurs qui forment collectivement un chiffreur avec de plus grandes performances. Dans le cadre de la dernière mise en oeuvre explicitée ci-dessus, on peut interconnecter et donc ajouter a posteriori n'importe quelle entité supplémentaire en connectant la sortie « PASS » sur une entrée d'une autre entité. Toute topologie réseau est possible, dont certaines sont données ci-après.

### Exemples de topologies possibles

La figure 6 représente un exemple de réalisation sous forme de vecteur où les entités élémentaires EE sont connectées les unes aux autres (comme pourrait l'être des EE connectées en anneau ouvert :

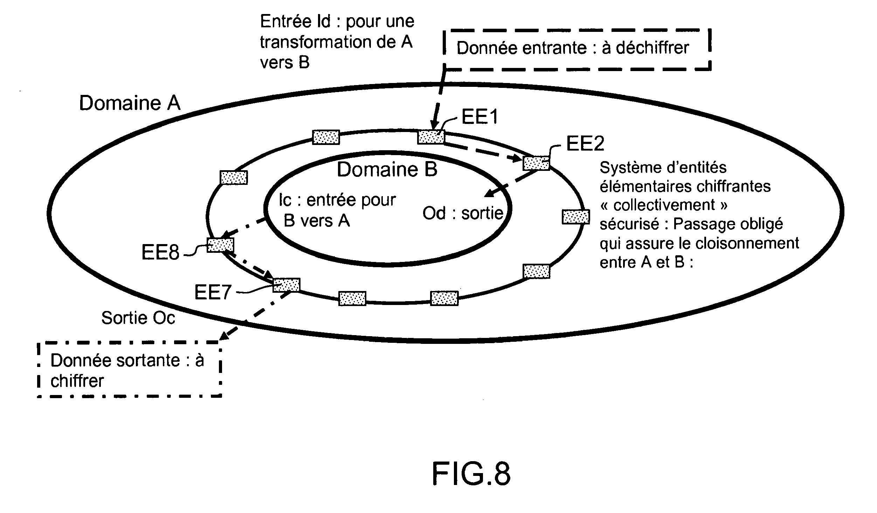

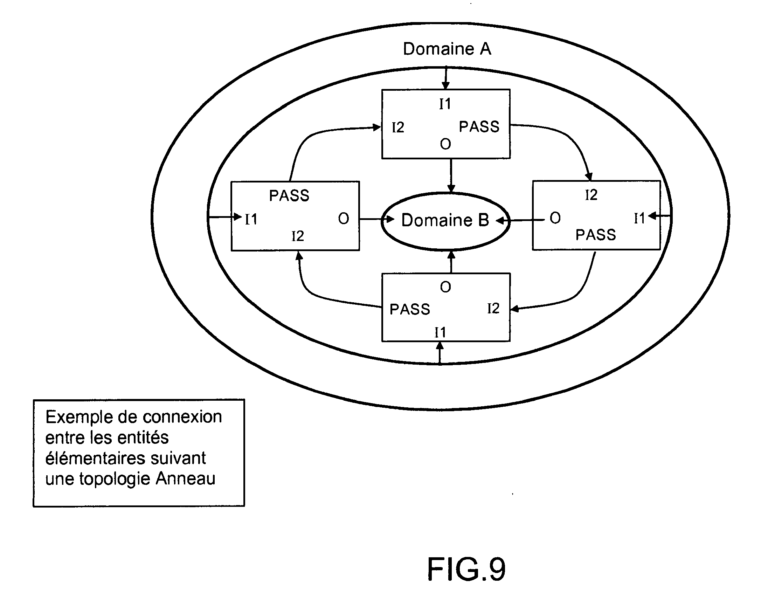

Les figures 8 et 9 représentent un exemple de réalisation sous forme d'anneau où les entités élémentaires EE sont distribuées sous la forme d'un anneau. L'entrée input correspond à une donnée à déchiffrer transitant éventuellement à travers plusieurs entités élémentaires EE₁, EE₂ ... selon la disponibilité des unités de traitement UT associées.

Cette représentation a l'avantage de bien montrer que le système chiffrant « parallélisé » est un système en coupure : c'est-à-dire qu'il cloisonne parfaitement les domaines A et B en séparant les entrées « I » des sorties « O »,

En effet, pour passer d'un domaine B vers A, c'est à dire de l'entrée « Ic » à la sortie « Oc », il faut franchir la couronne de sécurité constituée d'entités élémentaires EEi.

Les flèches dans la partie basse de la figure correspondent à des données entrantes à chiffrer. Elles passent dans une première entité élémentaire EE8, puis une deuxième EE7, dans laquelle, les données sont chiffrées et passent dans le domaine A par la sortie 07 de EE7.

Pour aller du domaine A vers B soit de l'entrée « Id » à la sortie « Od », il faut aussi franchir le système ; et cela, quel que soit le chemin interne (passage par une ou plusieurs Entité Elémentaire donc via une ou plusieurs sorties PASS).

Pour les flèches dans la partie supérieure de la figure, ceci correspond à des données entrantes à déchiffrer. Elles passent dans une première entité élémentaire EE1, puis une deuxième EE2, dans laquelle, les données sont déchiffrées et passent dans le domaine B par la sortie 02 de EE2.

La figure 9 schématise un exemple de mise en oeuvre pour laquelle le domaine A se présente sous la forme d'un anneau externe, au sein duquel sont disposées plusieurs entités élémentaires, EE1, EE2, EE3, EE4, qui reçoivent les données à traiter sur une première entrée E1 et qui les envoient après transformation au domaine B.

Les entités élémentaires EEi sont connectées entre elles en branchant les sorties « pass » Pᵢ d'une entité élémentaire à une entrée « I₂₊₁ » d'une autre entité élémentaire EEᵢ₊₁. Ceci est réalisé sans aucune restriction sur les topologies créées. Les données à traiter sont envoyées sur les entrées des entités élémentaires. Les données traitées sont transmises, par exemple, du domaine A vers le domaine B par les sorties O de chacune des entités élémentaires.

Sans sortir du cadre de l'invention, on peut inverser le sens de traitement des données pour passer du domaine B vers le domaine A. Dans ce cas, les sorties O jouent le rôle d'entrée et les entrées I1 correspondent aux données traitées.

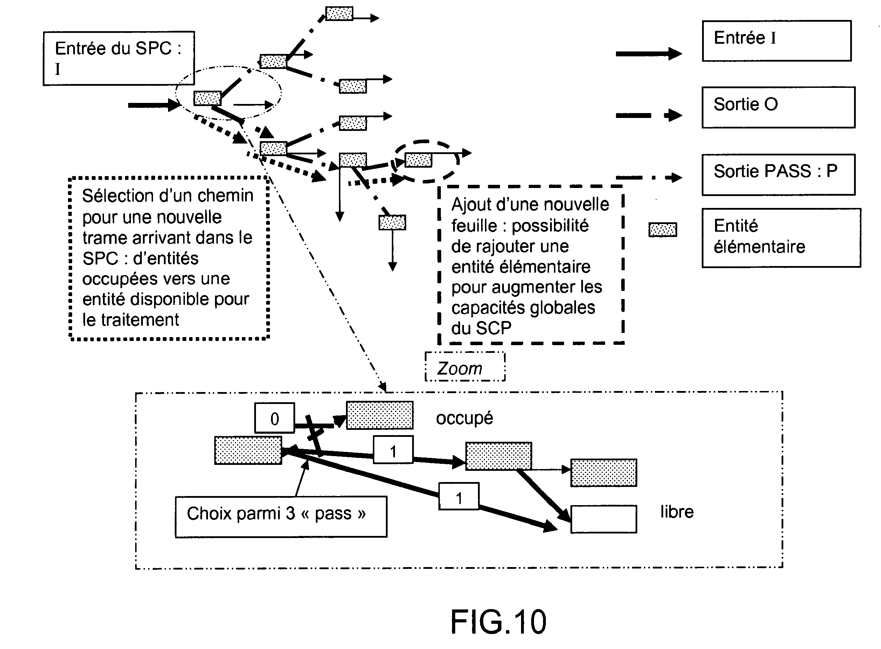

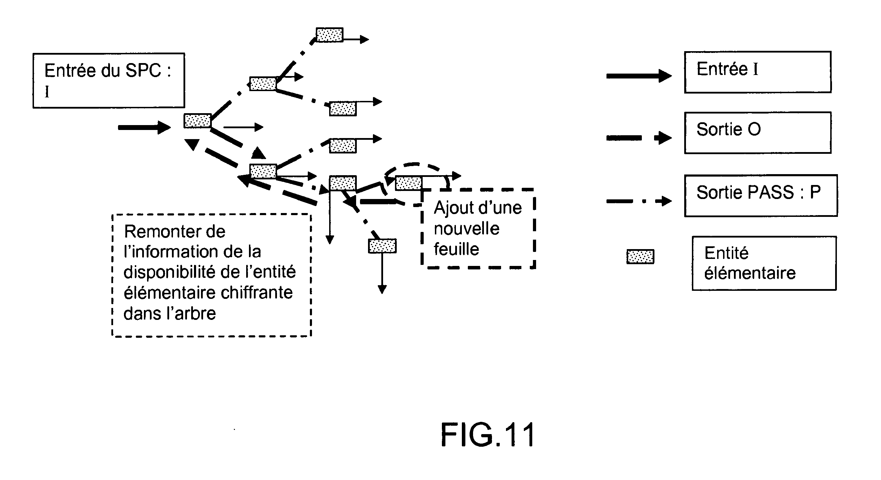

Les figures 10, 11 et 12 représentent des exemples de réalisation selon une topologie de type arbre.

Soit I l'entrée dans le système global, dans le cas où l'unité de traitement UT est occupée, alors il existe dans ce schéma trois sorties pass possibles.

Il est toujours possible d'ajouter une nouvelle feuille à l'arbre, une feuille étant constituée d'une entité élémentaire.

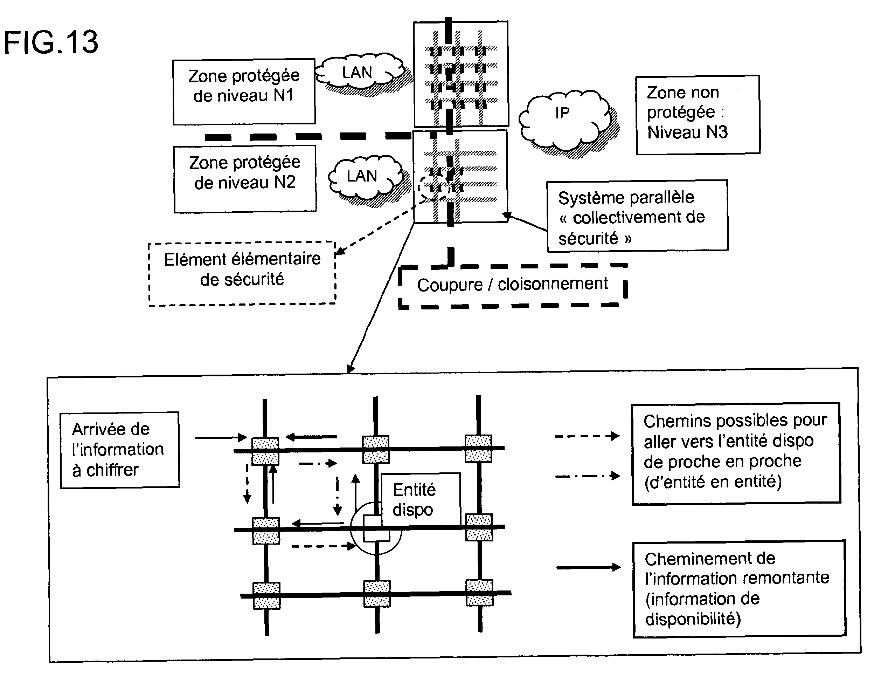

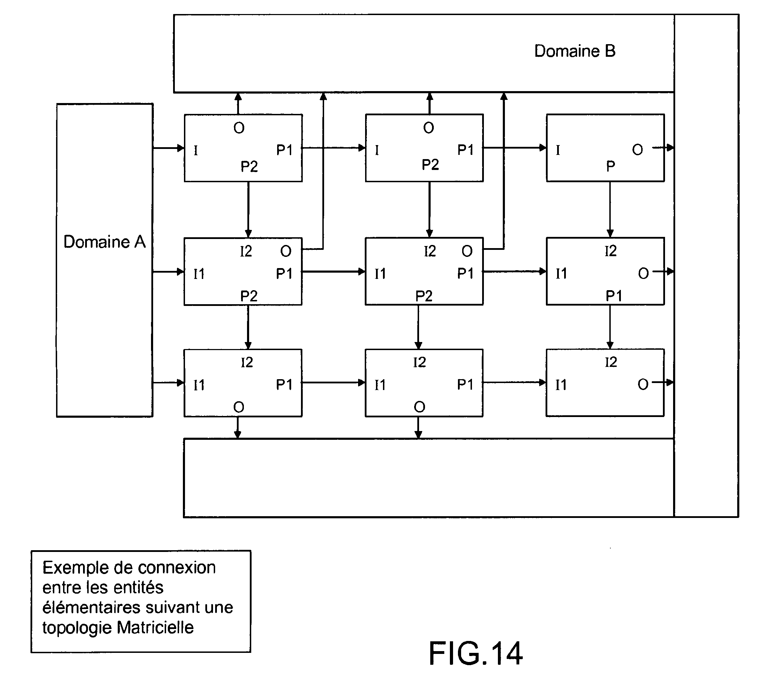

Les figures 13 et 14 représentent une topologie sous forme de matrice, appelé généralement mesh ou grille ou maillage.

Sur la figure 13, on a représenté un exemple comprenant deux zones protégées de niveau N1 et N2 et une zone non protégée IP (niveau N3). La partie inférieure de la figure représente un détail du traitement de l'information arrivant sur le système sécurisé. Un carré représente une entité élémentaire selon l'invention fonctionnant en accord avec les figures 4 à 6, par exemple.

Cette représentation offre les avantages suivants :
- Permettre le multi-niveau haut débit adapté aux besoins,
- Montrer la force du principe Logique Sécurisé des Noeuds et l'ensemble des possibilités d'interconnexion et donc de la remontée de l'information d'entité élémentaire en entité élémentaire (par exemple de chiffreurs en chiffreurs).

Le système et le procédé selon l'invention présentent notamment les avantages suivants :
- Les entités élémentaires sont utilisées au mieux, afin d'offrir une plus grande qualité de service,
- Le respect du cloisonnement entre des domaines présentant des niveaux de sécurité différents,
- Une fonction de routage simple à mettre en oeuvre et compatible du haut débit requis dans certains systèmes,
- Une fonction de routage répartie et dynamique,
- La solution fonctionne avec toute sorte de topologies,
- La solution reste indépendante des traitements de sécurité effectués,
- La solution est simple en mettre en oeuvre et évolutive en fonction des besoins de l'utilisateur.

## Revendications

1. Système pour traiter des données pouvant être échangées entre au moins un premier domaine ayant un niveau de sécurité A et un deuxième domaine ayant un niveau de sécurité B, avec A différent de B, **caractérisé en ce qu'**il comporte :
plusieurs entités élémentaires EEi, chacune desdites entités comprenant un module de routage URi et un dispositif UTi de traitement des données, le module de routage URi comprenant au moins une entrée Ii dans le domaine de niveau de sécurité A pour les données à traiter et au moins une première sortie Pi pour les données qui n'ont pas été traitées et qui restent soit dans le domaine de niveau de sécurité A, soit sont transmises vers l'entrée d'une autre entité élémentaire, et une deuxième sortie Li reliée au dispositif de traitement UTi, qui comprend une sortie Oi pour les données traitées qui passent dans le domaine de niveau de sécurité B, et **en ce que** lesdites entités élémentaires sont reliées, de façon telle que la première sortie Pi d'une unité de routage URi pour les données non traitées soit reliée à une entrée Ij d'une unité de routage URj d'une autre entité élémentaire EEj.

2. Système selon la revendication 1, **caractérisé en ce que** les entités élémentaires sont disposées selon une topologie arbre.

3. Système selon la revendication 1, **caractérisé en ce que** les entités élémentaires correspondent à une topologie en anneau, le domaine A formant un anneau externe, dans lequel se trouvent plusieurs entités élémentaires connectées entre elles de la manière suivante, la sortie Pi d'une entité élémentaire EEi est reliée à une entrée Ii+1 d'une entité élémentaire suivante EEi+1, chaque entité élémentaire étant reliée par une sortie Oi au domaine B.

4. Système selon la revendication 1, **caractérisé en ce que** les entités élémentaires sont disposées selon une topologie de type Vecteur, qui correspond à une topologie anneau ouvert, ou Matrice qui correspond à un ensemble de vecteurs.

5. Procédé pour traiter des données dans un système comprenant au moins deux domaines ayant des niveaux de sécurité différents, le premier domaine ayant un niveau de sécurité A et le deuxième domaine un niveau de sécurité B, **caractérisé en ce qu'**il comporte au moins les étapes suivantes :
o Recevoir dans le domaine de niveau de sécurité A, les données à traiter,
o Transmettre les données à traiter sur une entrée d'un premier module de routage URi,
o Vérifier si l'unité de traitement UTi associé à ce module de routage est disponible pour le traitement des données,
o Si l'unité de traitement UTi est disponible, alors traiter les données qui passent dans le domaine de niveau de sécurité B,
o Si l'unité de traitement UTi n'est pas disponible, alors les données restent dans le domaine de niveau de sécurité A et sont :
■ Soit transmises vers au moins une unité de routage d'une autre entité élémentaire au travers d'une sortie PASS,
■ Soit sorties du système en restant dans le domaine de niveau de sécurité A.

## Claims

1. System for processing data which can be exchanged between at least one first domain having a security level A and a second domain having a security level B, where A is different from B, **characterised in that** it comprises:
- several elementary entities EEi, each of said entities comprising a routing module URi and a device UTi for processing data, the routing module URi comprising at least one input li into the domain with security level A for the data to be processed and at least one first output Pi for the data which has not been processed and which remains either in the domain with security level A, or is transmitted to the input of another elementary entity, and a second output Li connected to the processing device UTi, which comprises an output Oi for the processed data passed into the domain with security level B, and **in that** said elementary entities are connected such that the first output Pi of a routing unit URi for the unprocessed data is connected to an input lj of a routing unit URj of another elementary entity EEj.

2. The system according to claim 1, **characterised in that** the elementary entities are arranged according to a tree topology.

3. The system according to claim 1, **characterised in that** the elementary entities correspond to a ring topology, domain A forming an external ring, in which several elementary entities are located and are connected together in the following manner, the output Pi of an elementary entity EEi is connected to an input li+1 of a following elementary entity EEi+1, each elementary entity being connected by an output Oi to domain B.

4. The system according to claim 1, **characterised in that** the elementary entities are arranged in accordance with a Vector type topology, which corresponds to an open ring topology, or a matrix type topology which corresponds to a set of vectors.

5. A process for processing data in a system comprising at least two domains having different security levels, the first domain having a security level A and the second domain having a security level B, **characterised in that** it at least comprises the following steps:
- receiving the data to be processed in the domain with security level A,
- transmitting the data to be processed to an input of a first routing module URi,
- verifying that the processing unit UTi associated with this routing module is available for data processing,
- if the processing unit UTi is available, then processing the data that passes into the domain with security level B,
- if the processing unit UTi is not available, then the data remains in the domain with security level A and are:
- either transmitted to at least one routing unit of another elementary entity through a PASS output,
- or are sent out of the system whilst remaining in the domain with security level A.

## Patentansprüche

1. System zum Verarbeiten von Daten, die zwischen wenigstens einem ersten Bereich mit Sicherheitsstufe A und einem zweiten Bereich mit Sicherheitsstufe B ausgetauscht werden können, wobei sich A von B unterscheidet, **dadurch gekennzeichnet, dass** es Folgendes umfasst:
- mehrere elementare Entitäten EEi, wobei jede der Entitäten ein Routing-Modul URi und eine Vorrichtung UTi zum Verarbeiten von Daten umfasst, wobei das Routing-Modul URi wenigstens einen Eingang li in den Bereich mit Sicherheitsstufe A für die zu verarbeitenden Daten und wenigstens einen ersten Ausgang Pi für die Daten umfasst, die nicht verarbeitet wurden und die entweder in dem Bereich mit Sicherheitsstufe A bleiben oder zum Eingang einer anderen elementaren Entität gesendet werden, und einen zweiten Ausgang Li, der mit der Verarbeitungsvorrichtung UTi verbunden ist, die einen Ausgang Oi für die verarbeiteten Daten hat, die in den Bereich mit Sicherheitsstufe B passieren, und **dadurch**, dass die elementaren Entitäten so verbunden sind, dass der erste Ausgang Pi einer Routing-Einheit URi für die unverarbeiteten Daten mit einem Eingang lj einer Routing-Einheit URj einer anderen elementaren Entität EEj verbunden ist.

2. System nach Anspruch 1, **dadurch gekennzeichnet, dass** die elementaren Entitäten in einer Baumtopologie angeordnet sind.

3. System nach Anspruch 1, **dadurch gekennzeichnet, dass** die elementaren Entitäten einer Ringtopologie entsprechen, wobei Bereich A einen externen Ring bildet, in dem sich mehrere elementare Entitäten befinden und auf die folgende Weise untereinander verbunden sind, wobei der Ausgang Pi einer elementaren Entität EEi mit einem Eingang li+1 einer folgenden elementaren Entität EEi+1 verbunden ist, wobei jede elementare Entität durch einen Ausgang Oi mit dem Bereich B verbunden ist.

4. System nach Anspruch 1, **dadurch gekennzeichnet, dass** die elementaren Entitäten in einer Topologie des Vektortyps, die einer offenen Ringtopologie entspricht, oder einer Topologie des Matrixtyps angeordnet sind, die einem Satz von Vektoren entspricht.

5. Verfahren zum Verarbeiten von Daten in einem System, das wenigstens zwei Bereiche mit unterschiedlichen Sicherheitsstufen umfasst, wobei der erste Bereich eine Sicherheitsstufe A und der zweite Bereich eine Sicherheitsstufe B hat, **dadurch gekennzeichnet, dass** es wenigstens die folgenden Schritte beinhaltet:
- Empfangen der zu verarbeitenden Daten in dem Bereich mit Sicherheitsstufe A,
- Senden der zu verarbeitenden Daten zu einem Eingang eines ersten Routing-Moduls URi,
- Überprüfen, ob die mit diesem Routing-Modul assoziierte Verarbeitungseinheit UTi für die Verarbeitung von Daten zur Verfügung steht,
- wenn die Verarbeitungseinheit UTi zur Verfügung steht, Verarbeiten der Daten, die in den Bereich mit Sicherheitsstufe B passieren,
- wenn die Verarbeitungseinheit UTi nicht zur Verfügung steht, dann bleiben die Daten in dem Bereich mit Sicherheitsstufe A und werden:
- entweder zu wenigstens einer Routing-Einheit einer anderen elementaren Entität über einen PASS-Ausgang gesendet,
- oder aus dem System gesendet, während sie in dem Bereich mit Sicherheitsstufe A bleiben.
